# EUROPEAN PATENT APPLICATION

(11) **EP 4 287 334 A1**
(43) Date of publication of application: **06.12.2023**
(21) Application number: 22758923.1
(22) Date of filing: 24.02.2022
(51) Int. Cl.: H01M 10/056, H01M 10/0525

(54) **SOLID ELECTROLYTE AND PREPARATION METHOD THEREFOR, AND SECONDARY BATTERY**

(30) Priority: 27.02.2021 CN 202110222938
(71) Applicant: Huawei Technologies Co., Ltd., Shenzhen, Guangdong 518129 (CN)
(72) Inventor: MA, Qiang, Shenzhen, Guangdong 518129 (CN); WU, Haobin, Hangzhou, Zhejiang 310028 (CN); XU, Yifei, Hangzhou, Zhejiang 310028 (CN); HONG, Xiang, Shenzhen, Guangdong 518129 (CN)
(74) Representative: Pfenning, Meinig & Partner mbB
(86) International application number: PCT/CN2022/077655
(87) International publication number: WO 2022/179559

(57) **Abstract**

Embodiments of this application provide a solid-state electrolyte. The solid-state electrolyte includes a porous coordination polymer having an unsaturated metal site, an anionic group coordinated with and grafted on the unsaturated metal site, and a cation bound with the anionic group. The anionic group includes one or more substituted carboxylate anionic groups and/or one or more substituted sulfonate anionic groups. The cation includes one or more of a lithium ion, a sodium ion, a potassium ion, a magnesium ion, a zinc ion, and an aluminum ion. The solid-state electrolyte presents a conduction characteristic of a single cation, so that concentration polarization in a battery system can be effectively avoided and growth of a metal negative electrode dendrite can be suppressed, thereby improving electrochemical performance and safety performance of a battery. Embodiments of this application further provide a preparation method of the solid-state electrolyte and a secondary battery including the solid-state electrolyte.

## Description

This application claims priority to Chinese Patent Application No. 202110222938.8, filed with the China National Intellectual Property Administration on February 27, 2021 and entitled "SOLID-STATE ELECTROLYTE AND PREPARATION METHOD THEREOF, AND SECONDARY BATTERY", which is incorporated herein by reference in its entirety.

### TECHNICAL FIELD

Embodiments of this application relate to the field of secondary battery technologies, and in particular, to a solid-state electrolyte and a preparation method thereof, and a secondary battery.

### BACKGROUND

With the development of economy and technologies, most electronic industries (such as portable electronic devices, uncrewed aerial vehicles, and electric vehicles) urgently need safer energy storage devices with higher energy density, higher power density, and a longer cycle life. However, a current lithium-ion battery based on a graphite negative electrode is close to an upper limit of energy density, and cannot meet an endurance requirement and a standby requirement of a user for the foregoing device. A metal negative electrode such as lithium, sodium, or potassium has a high theoretical specific capacity and a low electrochemical potential, to greatly improve energy density of a secondary battery and significantly improve user experience. However, the metal negative electrode has problems such as high chemical activity (which causes low coulombic efficiency), dendrite growth (which causes a side reaction and a safety risk), and large volume expansion (continuous cracking and reconstruction of a SEI membrane). When a liquid-state electrolyte is used, it is very likely to cause safety risks such as flammability and explosiveness. This hinders the commercialization process of the high-energy density battery based on the metal negative electrode.

To resolve the problems of the metal negative electrode, the researchers replaced the liquid-state electrolyte with a solid-state electrolyte. The solid-state electrolyte mainly includes a polymer electrolyte, an inorganic electrolyte (such as a sulfur compound electrolyte or an oxide electrolyte), and an organic-inorganic composite electrolyte. The polymer electrolyte has good processing performance, but has a low conductivity at a room temperature, a low quantity of transported cations, and low resistance to oxidation. The inorganic electrolyte has high ion conductivity, but has poor processing performance and poor electrode interface contact. The organic-inorganic composite electrolyte can make up their deficiencies to some extent. However, the existing organic-inorganic composite electrolyte still has problems such as a low quantity of transported cations, low ion conductivity, and poor composite uniformity, and cannot well facilitate improvement of comprehensive performance of the battery based on the metal negative electrode.

### SUMMARY

In view of this, an embodiment of this application provides a solid-state electrolyte. The solid-state electrolyte presents a conduction characteristic of a single cation, so that concentration polarization in a battery system can be effectively avoided and growth of a metal negative electrode dendrite can be suppressed, thereby improving electrochemical performance and safety performance of a battery.

Specifically, a first aspect of an embodiment of this application provides a solid-state electrolyte. The solid-state electrolyte includes a porous coordination polymer having an unsaturated metal site, an anionic group coordinated with and grafted on the unsaturated metal site, and a cation bound with the anionic group. The anionic group includes one or more substituted carboxylate anionic groups and/or one or more substituted sulfonate anionic groups. The cation includes one or more of a lithium ion, a sodium ion, a potassium ion, a magnesium ion, a zinc ion, and an aluminum ion. The anionic group is coordinated with and fastened to the unsaturated metal site of the porous coordination polymer. In this way, the solid-state electrolyte can implement fast transmission of a single cation under a poor solvent or even no solvent condition, and has a high quantity of transported cations, thereby avoiding concentration polarization caused due to anion movement in an electrochemical system and reducing internal impedance. In addition, growth of a metal negative electrode dendrite can also be effectively suppressed, thereby significantly improving electrochemical performance and safety performance of the battery.

In an implementation of this application, a structural formula of the anionic group is - Y-R₂-Z. Herein, Y represents an oxygen atom (O), a sulfur atom (S), or an imine group (-NH-), R₂ is a divalent hydrocarbyl group, a divalent substituted hydrocarbyl group, a divalent oxyl group, or a divalent substituted oxyl group, and Z is a carboxylate anion or a sulfonate anion. The anionic group is coordinated with the unsaturated metal site through Y An M-O, M-S, or M-N coordination bond may be formed between Y and a metal atom of the unsaturated metal site, so that the anionic group is firmly bonded to the porous coordination polymer.

In an implementation of this application, R₂ is a hydrocarbyl group, a substituted hydrocarbyl group, an oxyl group, or a substituted oxyl group in which a quantity of carbon atoms ranges from 1 to 20.

In some implementations of this application, R₂ is any one of an alkylene group, a halogenated alkylene group, an alkoxylene group, a halogenated alkoxylene group, an alkenylene group, a halogenated alkenylene group, an enoxylene group, a halogenated enoxylene group, an arylene group, a halogenated arylene group, an aryloxylene group, and a halogenated aryloxylene group.

In an implementation of this application, the porous coordination polymer uses M as a metal center and R-Xn as an organic ligand. Herein, M includes one or more metal elements of titanium, zirconium, hafnium, chromium, iron, cobalt, nickel, copper, and aluminum, and the metal element includes one or more valence states. Herein, R is an n-valent hydrocarbyl group, an n-valent substituted hydrocarbyl group, an n-valent oxyl group, or an n-valent substituted oxyl group, n is an integer from 1 to 4, and X is an oxygen-containing functional group that forms a metal-oxygen chemical bond with the unsaturated metal site. The porous coordination polymer has good membrane forming performance, so that processing difficulty of a solid-state electrolyte can be reduced. In addition, after a membrane is formed, the membrane has a relatively strong mechanical property, thereby improving safety performance of the battery. The porous coordination polymer has a uniform porous structure that facilitates ion transmission.

In an implementation of this application, X is a carboxyl group or a sulfo group. An M-O bond can be formed between the unsaturated metal site of the porous coordination polymer and each of the carboxyl group and the sulfo group.

In an implementation of this application, R is a hydrocarbyl group, a substituted hydrocarbyl group, an oxyl group, or a substituted oxyl group in which a quantity of carbon atoms ranges from 1 to 20.

In an implementation of this application, R is any one of an alkyl group, an alkylene group, a halogenated alkyl group, a halogenated alkylene group, an alkoxyl group, an alkoxylene group, a halogenated alkoxyl group, a halogenated alkoxylene group, an alkenyl group, an alkenylene group, a halogenated alkenyl group, a halogenated alkenylene group, an enoxyl group, an enoxylene group, a halogenated enoxyl group, a halogenated enoxylene group, an aryl group, an arylene group, a halogenated aryl group, a halogenated arylene group, an aryloxyl group, an aryloxylene group, a halogenated aryloxyl group, and a halogenated aryloxylene group.

In some implementations of this application, the organic ligand includes one or more of terephthalic acid, trimesic acid, biphenyldicarboxylic acid, biphenyltricarboxylic acid, and 1,3,5-tri(4-carboxyphenyl)benzene.

In an implementation of this application, a thickness of the solid-state electrolyte ranges from 1 µm to 100 µm. By using an appropriate thickness, surface resistance and mechanical strength of an electrolyte layer can be controlled to an appropriate level, thereby improving battery performance.

In an implementation of this application, the solid-state electrolyte further includes a liquid electrolyte solvent. A mass percentage of the liquid electrolyte solvent in the solid-state electrolyte is less than or equal to 20%. A small amount of the liquid electrolyte solvent is added, to further improve an ion conductivity and improve contact between the solid-state electrolyte and an electrode. The liquid electrolyte solvent may be filled in a porous structure of a coordination polymer electrolyte.

In an implementation of this application, the solid-state electrolyte further includes a binding agent. In an implementation of this application, a mass ratio of the coordination polymer electrolyte to the binding agent is between 1: 1 and 100:1. An appropriate amount of the binding agent is added, to facilitate membrane forming of the coordination polymer electrolyte. In addition, closer binding is implemented for the coordination polymer electrolyte, thereby improving structural stability of the solid-state electrolyte membrane.

In an implementation of this application, the binding agent includes one or more of polyvinylidene fluoride, poly(methyl methacrylate), polytetrafluoroethylene, poly(vinylidene fluoride-co-hexafluoropropylene), polyacrylonitrile, polyimide, polybenzimidazole, polyethylene glycol, polyethylene oxide, polydopamine, sodium carboxymethyl cellulose, styrene-butadiene rubber, polyvinyl alcohol, polyacrylic acid, lithium polyacrylate, polyvinylpyrrolidon, polylactic acid, sodium alginate, polystyrene sulfonate, lithium polystyrene sulfonate, and gelatin.

A second aspect of an embodiment of this application provides a preparation method of a solid-state electrolyte, including:
making a mixed slurry by using a coordination polymer electrolyte, performing coating by using the mixed slurry to form a membrane, and performing drying to obtain a solid-state electrolyte, where the coordination polymer electrolyte includes a porous coordination polymer having an unsaturated metal site, an anionic group coordinated with and grafted on the unsaturated metal site, and a cation bound with the anionic group; the anionic group includes one or more substituted carboxylate anionic groups and/or one or more substituted sulfonate anionic groups; and the cation includes one or more of a lithium ion, a sodium ion, a potassium ion, a magnesium ion, a zinc ion, and an aluminum ion.

In an implementation of this application, preparation of the coordination polymer electrolyte includes:
dispersing the porous coordination polymer having the unsaturated metal site in a solution of a compound having the anionic group, and performing stirring for a reaction, so that the compound having the anionic group is coordinated with and grafted on the unsaturated metal site, to obtain a grafted product, where the compound having the anionic group includes one or more of substituted carboxylic acid and substituted sulfoacid; and
placing the grafted product in a liquid electrolyte of a salt containing the cation, and performing stirring for a reaction, to obtain the coordination polymer electrolyte.

In an implementation of this application, before the dispersing the porous coordination polymer having the unsaturated metal site in a solution of a compound having the anionic group, an activation operation is further included. The activation operation may be specifically: heating the porous coordination polymer for 1 hour to 12 hours at 80°C to 350°C in vacuum for activation. The activation facilitates a subsequent coordination grafting reaction.

In an implementation of this application, the salt containing the cation includes one or more of hexafluorophosphate, hexafluoroarsenate, perchlorate, tetrafluoroborate, bisoxalatoborate, difluoro(oxalato)borate, bisfluorosulfonimide, and bis(fluorosulfonyl)imide that contain the cation.

In an implementation of this application, the mixed slurry includes an organic solvent and/or a binding agent.

The preparation method of the solid-state electrolyte provided in this embodiment of this application has a simple process, low preparation costs, and low processing difficulty, and facilitates large-scale production.

An embodiment of this application further provides a secondary battery, including a positive electrode plate, a metal negative electrode plate, and an electrolyte. The electrolyte includes the solid-state electrolyte according to the first aspect of embodiments of the present invention. The metal negative electrode plate may be a lithium negative electrode, a sodium negative electrode, a potassium negative electrode, a magnesium negative electrode, a zinc negative electrode, or an aluminum negative electrode. Correspondingly, the secondary battery may be a lithium secondary battery, a sodium secondary battery, a potassium secondary battery, a magnesium secondary battery, a zinc secondary battery, or an aluminum secondary battery. The secondary battery has high cycle performance and high safety.

An embodiment of this application further provides an electronic device. The electronic device includes a housing, and an electronic component and a battery that are accommodated in the housing. The battery supplies power to the electronic component. The battery includes the secondary battery provided in the foregoing embodiment of this application. The secondary battery is configured to supply power to the electronic device. The electronic device may be but is not limited to a mobile phone, or may be an electronic product such as a tablet computer, an intelligent wearable product, an uncrewed aerial vehicle, or an electric vehicle.

### BRIEF DESCRIPTION OF DRAWINGS

FIG. 1 is a schematic diagram of a structure of a secondary battery according to an embodiment of this application;
FIG. 2 is a schematic diagram of a structure of an electronic device according to an embodiment of this application;
FIG. 3 is a scanning electron microscope (Scanning electron microscope, SEM) image of a solid-state electrolyte in Example 1 of this application;
FIG. 4 is a scanning electron microscope image of a solid-state electrolyte in Example 2 of this application;
FIG. 5 is a scanning electron microscope image of a solid-state electrolyte in Example 3 of this application;
FIG. 6 is a scanning electron microscope image of a solid-state electrolyte in Example 4 of this application;
FIG. 7 is a scanning electron microscope image of a solid-state electrolyte in Example 5 of this application; and
FIG. 8 is a diagram of a cycle curve of a battery in Examples 1 to 7 and Comparative examples 1 and 2 of this application.

### DESCRIPTION OF EMBODIMENTS

The following describes embodiments of this application with reference to the accompanying drawings in embodiments of this application.

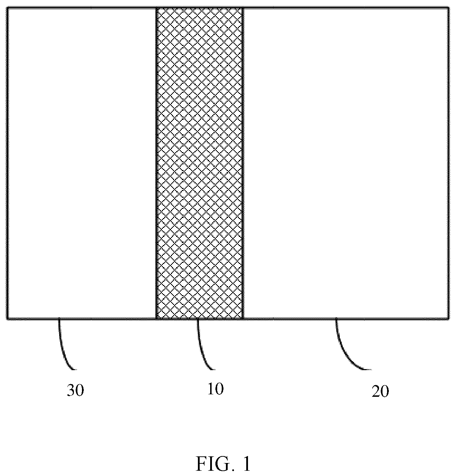

With reference to FIG. 1, an embodiment of this application provides a solid-state electrolyte 10. The solid-state electrolyte 10 may be used in a secondary battery. The secondary battery includes a positive electrode plate 20, a metal negative electrode plate 30, and a solid-state electrolyte 10 disposed between the positive electrode plate 20 and the metal negative electrode plate 30. The solid-state electrolyte 10 includes a coordination polymer electrolyte. The coordination polymer electrolyte includes a porous coordination polymer having an unsaturated metal site, an anionic group coordinated with and grafted on the unsaturated metal site, and a cation bound with the anionic group. The anionic group may include one or more of a substituted carboxylate anionic group and a substituted sulfonate anionic group. The cation is an electrolyte salt cation, and may specifically include one or more of a lithium ion, a sodium ion, a potassium ion, a magnesium ion, a zinc ion, and an aluminum ion. The metal negative electrode plate 30 may be a lithium negative electrode, a sodium negative electrode, a potassium negative electrode, a magnesium negative electrode, a zinc negative electrode, or an aluminum negative electrode. Correspondingly, the secondary battery may be a lithium secondary battery, a sodium secondary battery, a potassium secondary battery, a magnesium secondary battery, a zinc secondary battery, or an aluminum secondary battery. The secondary battery has high electrochemical performance and safety performance.

For the solid-state electrolyte 10 in this embodiment of this application, the anionic group is coordinated with and grafted on the unsaturated metal site of the porous coordination polymer. In this way, because an anion is coordinated and fastened, the solid-state electrolyte 10 can implement fast transmission of a single cation under a poor solvent or even no solvent condition, and has a high quantity of transported cations (greater than 0.85), thereby avoiding concentration polarization caused due to anion movement in an electrochemical system and reducing internal impedance. In addition, growth of a metal negative electrode dendrite can also be effectively suppressed, thereby significantly improving electrochemical performance and safety performance of the battery. By using the solid-state electrolyte in this embodiment of this application, use of a liquid electrolyte can be reduced or avoided, to reduce direct contact between the liquid electrolyte and a metal negative electrode, thereby reducing side reactions and improving coulombic efficiency of the metal negative electrode. In addition, the solid-state electrolyte 10 in this embodiment of this application has good interface contact with the electrode, and can load a small amount of a solvent, thereby further improving an ion conductivity and improving contact between the solid-state electrolyte and the electrode.

In this implementation of this application, the anionic group may include the one or more of the substituted carboxylate anionic group and the substituted sulfonate anionic group. The substituted carboxylate anionic group may be an azyl-substituted, a hydroxyl-substituted, or a thiol-substituted carboxylate anionic group. The substituted sulfonate anionic group may be an azyl-substituted, a hydroxyl-substituted, or a thiol-substituted sulfonate anionic group.

In an implementation of this application, a structural formula of the anionic group may be represented as -Y-R₂-Z. Herein, Y represents an oxygen atom (O), a sulfur atom (S), or an imine group (-NH-), R₂ is a divalent hydrocarbyl group, a divalent substituted hydrocarbyl group, a divalent oxyl group, or a divalent substituted oxyl group, and Z is a carboxylate anion (COO⁻) or a sulfonate anion (SO₃⁻). The anionic group is coordinated with the unsaturated metal site of the porous coordination polymer through Y A structural formula of the substituted carboxylate anionic group is -Y-R₂-COO⁻. A structural formula of the substituted sulfonate anionic group is -Y-R₂-SO₃⁻. In an implementation of this application, when Z is a sulfonate anion, a degree of dissociation is higher, thereby helping improve a free cation concentration. In some implementations of this application, the anionic group may be -O-R₂-COO⁻, -S-R₂-COO⁻, -NH-R₂-COO⁻, -O-R₂-SO₃⁻, -S-R₂-SO₃⁻, or -NH-R₂-SO₃⁻. When a molecular structure of the coordination polymer electrolyte includes a plurality of anionic groups, structures of the plurality of anionic groups may be the same or may be different.

In some implementations of this application, R₂ is a divalent hydrocarbyl group, a divalent substituted hydrocarbyl group, a divalent oxyl group, or a divalent substituted oxyl group in which a quantity of carbon atoms ranges from 1 to 20. Specifically, the quantity of carbon atoms of R₂ may be 1, 2, 3, 4, 5, 6, 7, 8, 9, 10, 11, 12, 13, 14, 15, 16, 17, 18, 19, or 20. In some embodiments, R₂ may be any group selected from an alkylene group, a halogenated alkylene group, an alkoxylene group, a halogenated alkoxylene group, an alkenylene group, a halogenated alkenylene group, an enoxylene group, a halogenated enoxylene group, an arylene group, a halogenated arylene group, an aryloxylene group, and a halogenated aryloxylene group. A quantity of carbon atoms of each of the alkylene group, the halogenated alkylene group, the alkoxylene group, and the halogenated alkoxylene group may range from 1 to 20. Further, the quantity of carbon atoms may range from 1 to 8. A quantity of carbon atoms of each of the alkenylene group, the halogenated alkenylene group, the enoxylene group, and the halogenated enoxylene group may range from 2 to 20. Further, the quantity of carbon atoms may range from 2 to 8. A quantity of carbon atoms of each of the arylene group, the halogenated arylene group, the aryloxylene group, and the halogenated aryloxylene group may range from 6 to 20. Further, the quantity of carbon atoms may range from 6 to 10. A small quantity of carbon atoms indicates a small molecular volume. In this case, it is easy for the group to be coordinated with and grafted on a metal atom. A large quantity of carbon atoms indicates a large molecular volume. In this case, it is not easy for the group to be coordinated with and grafted on a metal atom. A halogen in each of the halogenated alkylene group, the halogenated alkoxylene group, the halogenated alkenylene group, the halogenated enoxylene group, the halogenated arylene group, and the halogenated aryloxylene group includes fluorine, chlorine, bromine, and iodine. Halogenation may be full halogenation or partial halogenation. R₂ may be a linear-chain or branched-chain hydrocarbyl group, substituted hydrocarbyl group, or oxyl group. In some implementations, the anionic group may be specifically, for example, -NH-CH₂-CH₂-SO₃⁻, -NH-CH₂-CH₂-CH₂-SO₃⁻, -S-CH₂-CH₂-SO₃⁻, -S-CH₂-CH₂-CH₂-SO₃⁻, -O-CH₂-CH₂-SO₃⁻, -O-CH₂-CH₂-CH₂-SO₃⁻, -NH-CF₂-CF₂-COO⁻, -NH-CF₂-CF₂-CF₂-SO₃⁻, -S-CF₂-CF₂-CF₂-COO⁻, -S-CF₂-CF₂-SO₃⁻, -O-CF₂-CF₂-SO₃⁻, or -O-CF₂-CF₂-CF₂-COO⁻.

In an implementation of this application, the coordination polymer electrolyte is a metal-organic coordination polymer single-ion solid-state electrolyte. The porous coordination polymer (Porous Coordination Polymer, PCP) uses M as a metal center and R-Xₙ as an organic ligand. The porous coordination polymer has a uniform porous structure. Herein, M may be one or more of metal titanium (Ti), zirconium (Zr), hafnium (Hf), chromium (Cr), iron (Fe), cobalt (Co), nickel (Ni), copper (Cu), or aluminum (Al). Herein, R is an n-valent hydrocarbyl group, an n-valent substituted hydrocarbyl group, an n-valent oxyl group, or an n-valent substituted oxyl group, n may be 1, 2, 3, or 4, and X is an oxygen-containing functional group that forms a metal-oxygen chemical bond with the unsaturated metal site of the porous coordination polymer. Specifically, X may be a carboxyl group or a sulfo group.

In an implementation of the present invention, the porous coordination polymer has the unsaturated metal site, and the unsaturated metal site is a metal center whose valence is unsaturated and has a coordination capability. The porous coordination polymer may have one or more unsaturated metal sites.

In an implementation of the present invention, the porous coordination polymer may include one or more organic ligands. When the porous coordination polymer includes a plurality of organic ligands, the plurality of organic ligands may be the same organic ligand, or may be different organic ligands. The porous coordination polymer may include only a carboxyl group or a sulfo group, or may include both a carboxyl group and a sulfo group.

In an implementation of the present invention, R is a hydrocarbyl group, a substituted hydrocarbyl group, an oxyl group, or a substituted oxyl group in which a quantity of carbon atoms ranges from 1 to 20. Specifically, R may be any one of an alkyl group, an alkylene group, a halogenated alkyl group, a halogenated alkylene group, an alkoxyl group, an alkoxylene group, a halogenated alkoxyl group, a halogenated alkoxylene group, an alkenyl group, an alkenylene group, a halogenated alkenyl group, a halogenated alkenylene group, an enoxyl group, an enoxylene group, a halogenated enoxyl group, a halogenated enoxylene group, an aryl group, an arylene group, a halogenated aryl group, a halogenated arylene group, an aryloxyl group, an aryloxylene group, a halogenated aryloxyl group, and a halogenated aryloxylene group. A quantity of carbon atoms of each of the alkyl group, the alkylene group, the halogenated alkyl group, the halogenated alkylene group, the alkoxyl group, the alkoxylene group, the halogenated alkoxyl group, and the halogenated alkoxylene group ranges from 1 to 20. Further, the quantity of carbon atoms ranges from 1 to 8. A quantity of carbon atoms of each of the alkenyl group, the alkenylene group, the halogenated alkenyl group, the halogenated alkenylene group, the enoxyl group, the enoxylene group, the halogenated enoxyl group, and the halogenated enoxylene group ranges from 2 to 20. Further, the quantity of carbon atoms ranges from 2 to 8. A quantity of carbon atoms of each of the aryl group, the arylene group, the halogenated aryl group, the halogenated arylene group, the aryloxyl group, the aryloxylene group, the halogenated aryloxyl group, and the halogenated aryloxylene group ranges from 6 to 20. Further, the quantity of carbon atoms ranges from 6 to 10. A halogen in each of the halogenated alkyl group, the halogenated alkylene group, the halogenated alkoxyl group, the halogenated alkoxylene group, the halogenated alkenyl group, the halogenated alkenylene group, the halogenated enoxyl group, the halogenated enoxylene group, the halogenated aryl group, the halogenated arylene group, the halogenated aryloxyl group, and the halogenated aryloxylene group includes fluorine, chlorine, bromine, or iodine. Halogenation may be full halogenation or partial halogenation. R may be a linear-chain or branched-chain hydrocarbyl group, substituted hydrocarbyl group, oxyl group, or substituted oxyl group.

In some specific implementations of this application, the organic ligand includes one or more of terephthalic acid, trimesic acid, biphenyldicarboxylic acid, biphenyltricarboxylic acid, and 1,3,5-tri(4-carboxyphenyl)benzene.

In an implementation of this application, a structural formula of the coordination polymer electrolyte may be shown in Formula (1):

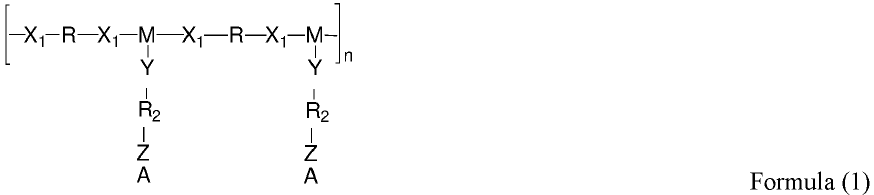

In Formula (1), M is a metal center, and R may be a divalent hydrocarbyl group, a divalent substituted hydrocarbyl group, a divalent oxyl group, or a divalent substituted oxyl group; and may be specifically any one of an alkylene group, a halogenated alkylene group, an alkoxylene group, a halogenated alkoxylene group, an alkenylene group, a halogenated alkenylene group, an enoxylene group, a halogenated enoxylene group, an arylene group, a halogenated arylene group, an aryloxylene group, and a halogenated aryloxylene group. X₁ is -COO⁻ or -SO₃⁻. Y is selected from O, S, or NH, and R₂ is a divalent hydrocarbyl group, a divalent substituted hydrocarbyl group, a divalent oxyl group, or a divalent substituted oxyl group. Z is a carboxylate anion (COO⁻) or a sulfonate anion (SO₃⁻). A is a cation, and may be specifically one or more of a lithium ion, a sodium ion, a potassium ion, a magnesium ion, a zinc ion, and an aluminum ion. Herein, n represents a degree of polymerization, and may be specifically an integer greater than or equal to 1.

In an implementation of this application, a thickness of the solid-state electrolyte 10 may be designed according to an actual requirement. The thickness of the solid-state electrolyte 10 may range from 1 µm to 100 µm. In some implementations, the thickness of the solid-state electrolyte 10 may range from 5 µm to 60 µm, and may be specifically, for example, 5 µm, 10 µm, 15 µm, 20 µm, 25 µm, 30 µm, 35 µm, 40 µm, 45 µm, 50 µm, or 60 µm. An excessively large thickness of the solid-state electrolyte 10 indicates excessively large surface resistance of an electrolyte layer, thereby affecting battery performance. An excessively small thickness indicates poor mechanical strength, thereby causing a short circuit.

In some implementations of this application, to further improve an ion conductivity of the solid-state electrolyte 10 and improve contact between the solid-state electrolyte 10 and each of positive and negative electrodes, the solid-state electrolyte 10 may further include a liquid electrolyte solvent. The liquid electrolyte solvent is filled in a micropore of the coordination polymer electrolyte. A mass percentage of the liquid electrolyte solvent in the solid-state electrolyte is less than or equal to 20%. In some implementations, the mass percentage of the liquid electrolyte solvent in the solid-state electrolyte ranges from 1% to 15%. In some other implementations, the mass percentage of the liquid electrolyte solvent in the solid-state electrolyte ranges from 3% to 10%. In some other implementations, the mass percentage of the liquid electrolyte solvent in the solid-state electrolyte ranges from 5% to 8%. The liquid electrolyte solvent may be one or more of a carbonate solvent, an ether solvent, and a carboxylate solvent. The liquid electrolyte solvent may be obtained by mixing the foregoing three solvents according to any ratio. The carbonate solvent includes cyclic carbonate or chain carbonate. The cyclic carbonate may be specifically one or more of ethylene carbonate (EC), propylene carbonate (PC), γ-butyrolactone (GBL), butylene carbonate (BC), fluoroethylene carbonate (FEC), and vinylene carbonate (VC). The chain carbonate may be specifically one or more of dimethyl carbonate (DMC), ethyl methyl carbonate (EMC), diethyl carbonate (DEC), and dipropyl carbonate (DPC). The ether solvent includes cyclic ether or chain ether. The cyclic ether may be specifically one or more of 1,3-dioxolane (DOL), 1,4-dioxane (DX), crown ether, tetrahydrofuran (THF), 2-methyl tetrahydrofuran (2-CH₃-THF), and 2-trifluoromethyl tetrahydrofuran (2-CF₃-THF). The chain ether may be specifically one or more of dimethoxymethane (DMM), 1,2-dimethoxyethane (DME), and diethylene glycol dimethyl ether (TEGDME). The carboxylate solvent may be specifically one or more of methyl acetate (MA), ethyl acetate (EA), propyl acetate (EP), butyl acetate, propyl propionate (PP), and butyl propionate.

In some implementations of this application, the solid-state electrolyte further includes a binding agent. In this embodiment of this application, the coordination polymer electrolyte in the solid-state electrolyte is mostly a powder sample. Therefore, the binding agent is added, to facilitate membrane forming of the coordination polymer electrolyte. In addition, closer binding is implemented for the coordination polymer electrolyte, thereby improving structural stability of a solid-state electrolyte membrane. The binding agent may include one or more of polyvinylidene fluoride (PVDF), poly(methyl methacrylate) (PMMA), polytetrafluoroethylene (PTFE), poly(vinylidene fluoride-co-hexafluoropropylene) (PVDF-HFP), polyacrylonitrile (PAN), polyimide (PI), polybenzimidazole (PBI), polyethylene glycol (PEG), polyethylene oxide (PEO), polydopamine (PDA), sodium carboxymethyl cellulose (CMC), styrene-butadiene rubber (SBR), polyvinyl alcohol (PVA), polyacrylic acid (PAA), lithium polyacrylate (LiPAA), polyvinylpyrrolidon (PVP), polylactic acid (PLA), sodium alginate (SA), polystyrene sulfonate (PSS), lithium polystyrene sulfonate (LiPSS), and gelatin. In some implementations of this application, in the solid-state electrolyte 10, a mass ratio of the coordination polymer electrolyte to the binding agent may be (1-100):1. Further, the mass ratio may be (5-90): 1, or may be (10-80): 1, (20-60): 1, or (30-50): 1. An excessive content of the binding agent indicates reduction of ion conductivity, thereby affecting ion transmission of the electrolyte. When a membrane forming requirement is met, the content of the binding agent is controlled to a relatively small level, to help improve ion transmission performance of the solid-state electrolyte.

The solid-state electrolyte 10 in this embodiment of this application has a high quantity of transported cations (such as lithium ions), and can implement fast transmission of a single cation. The quantity of transported cations is greater than 0.85. In some implementations, a quantity of transported cations is greater than or equal to 0.9. In this embodiment of this application, a room-temperature conductivity of the solid-state electrolyte 10 containing no liquid electrolyte solvent ranges from 0.5 mS/cm to 5 mS/cm, and a room-temperature conductivity of the solid-state electrolyte 10 containing the liquid electrolyte solvent ranges from 3 mS/cm to 8 mS/cm.

In an implementation of this application, the metal negative electrode plate 30 may be a lithium negative electrode, a sodium negative electrode, a potassium negative electrode, a magnesium negative electrode, a zinc negative electrode, or an aluminum negative electrode. The lithium negative electrode, the sodium negative electrode, the potassium negative electrode, the magnesium negative electrode, the zinc negative electrode, and the aluminum negative electrode may be metal elements of lithium, sodium, potassium, magnesium, zinc, and aluminum, or an alloy thereof; or may be the foregoing metal having a current collector or an alloy thereof. The lithium negative electrode is used as an example. The lithium negative electrode may be pure metal lithium or a lithium alloy, or may be lithium metal or a lithium alloy that is included in a current collector and that is disposed on the current collector. The lithium alloy may include at least one of a lithium silicon alloy, a lithium aluminum alloy, a lithium tin alloy, and a lithium indium alloy.

This embodiment of this application further provides a preparation method of the solid-state electrolyte, including:
making a mixed slurry by using the coordination polymer electrolyte, performing coating by using the mixed slurry to form a membrane, performing drying, and then performing rolling to a specific thickness to obtain the solid-state electrolyte.

The mixed slurry may include a binding agent, and may further include an organic solvent. Specifically, a preparation process of the mixed slurry may be: dispersing the binding agent in the organic solvent to obtain a mixed liquor, and dispersing a coordination polymer in the mixed liquor to obtain the mixed slurry. The organic solvent may be N-methyl pyrrolidone (NMP), acetone, acetonitrile, methanol, ethanol, dimethyl carbonate, ethyl methyl carbonate, diethyl carbonate, tetrahydrofuran, N,N-dimethylformamide (DMF), dimethyl ether, dimethyl sulfide, 1,3-dioxolane, 1,4-dioxane, 1,2-dimethoxyethane, dimethoxyethane, di-trifluoroethyl ether, hexafluoroisopropyl methyl ether, hexafluoroisopropyl ethyl ether, methyl perfluorobutyl ether, ethyl perfluorobutyl ether, tetrafluoroethyl tetrafluoropropyl ether, and tetrafluoroethyl octafluoroamylether.

In an implementation of this application, a preparation process of the coordination polymer electrolyte may include:
Step (1): Activate the porous coordination polymer having the unsaturated metal site, disperse the porous coordination polymer in a solution of a compound having an anionic group, and perform stirring for a reaction, so that the compound having the anionic group is coordinated with and grafted on the unsaturated metal site, to obtain a grafted product, where the compound having the anionic group includes one or more of substituted carboxylic acid and substituted sulfoacid.
Step (2): Dry the grafted product, place the dried product in a liquid electrolyte of a salt containing a cation, and perform stirring for a reaction, to obtain the coordination polymer electrolyte.

In an implementation of this application, in step (1), an operation of activating the porous coordination polymer may be specifically: heating the porous coordination polymer for 1 hour to 12 hours at 80°C to 350°C in vacuum for activation. The activation facilitates a subsequent coordination grafting reaction. In some implementations, the compound having the anionic group may be HO-R₂-COOH, HS-R₂-COOH, NH₂-R₂-COOH, HO-R₂-SO₃H, HS-R₂-SO₃H, or NH₂-R₂-SO₃H. A time period of the stirring for the reaction may be 6 hours to 48 hours. In the solution of the compound having the anionic group, the solvent may be N-methyl pyrrolidone, acetone, acetonitrile, methanol, ethanol, dimethyl carbonate, ethyl methyl carbonate, diethyl carbonate, tetrahydrofuran, N,N-dimethylformamide, dimethyl ether, dimethyl sulfide, 1,3-dioxolane, 1,4-dioxane, 1,2-dimethoxyethane, dimethoxyethane, di-trifluoroethylether, hexafluoroisopropyl methyl ether, hexafluoroisopropyl ethyl ether, methyl perfluorobutyl ether, ethyl perfluorobutyl ether, tetrafluoroethyl tetrafluoropropyl ether, and tetrafluoroethyl octafluoroamylether.

The porous coordination polymer having the unsaturated metal site in step (1) may be prepared by using a solvothermal method. The porous coordination polymer may be obtained by specifically dispersing an organic ligand and a metal salt at a molar ratio of 1:(1-4) in a solvent, performing ultrasonic dispersion and performing stirring for 10 minutes to 60 minutes to obtain a mixed liquor, and placing the mixed liquor into a reaction kettle at 80°C to 350°C for a solvothermal reaction. The metal salt is a salt including a metal center. The solvent in the solvothermal reaction system includes but is not limited to deionized water, N-methyl pyrrolidone, acetone, acetonitrile, methanol, ethanol, dimethyl carbonate, ethyl methyl carbonate, diethyl carbonate, tetrahydrofuran, N,N-dimethylformamide, dimethyl ether, dimethyl sulfide, 1,3-dioxolane, 1,4-dioxane, 1,2-dimethoxyethane, dimethoxyethane, di-trifluoroethyl ether, hexafluoroisopropyl methyl ether, hexafluoroisopropyl ethyl ether, methyl perfluorobutyl ether, ethyl perfluorobutyl ether, tetrafluoroethyl tetrafluoropropyl ether, and tetrafluoroethyl octafluoroamylether. In a reaction process, a regulator such as formic acid may be further added to regulate a particle size of a product, a quantity of defect sites, and the like.

In step (2), in the liquid electrolyte of the salt containing the cation, the salt containing the cation may include one or more of hexafluorophosphate, hexafluoroarsenate, perchlorate, tetrafluoroborate, bisoxalatoborate, difluoro(oxalato)borate, bisfluorosulfonimide, and bis(fluorosulfonyl)imide that contain the cation. For example, the salt containing the cation may be lithium hexafluorophosphate, lithium hexafluorarsenate, lithium perchlorate, lithium tetrafluoroborate, lithium bisoxalatoborate, lithium difluoro(oxalato)borate, lithium bis(fluorosulfonyl)imide, or lithium bis(trifluoromethanesulfonyl)imide. The organic solvent may be the foregoing liquid electrolyte solvent, for example, a carbonate solvent, an ether solvent, or a carboxylate solvent; or may be another organic solvent in the solvent in step (1), such as acetonitrile. A time period of the stirring for the reaction may be 6 hours to 48 hours. In a process of performing the stirring for the reaction, ion exchange is implemented between the cation in the salt containing the cation and the anionic group. After the stirring for the reaction is completed, a powder sample of the coordination polymer electrolyte may be obtained by performing drying at 60°C to 100°C. In this embodiment of this application, when the solvent used in the liquid electrolyte of the salt containing the cation is a commonly used liquid electrolyte solvent, if the final solid-state electrolyte needs to include a specific amount of the liquid electrolyte solvent, the electrolyte may be not completely dried, so that only a part of the liquid electrolyte solvent is reserved. When the solvent used in the liquid electrolyte of the salt containing the cation is not a commonly used liquid electrolyte solvent but another organic solvent, if the final solid-state electrolyte needs to include a specific amount of the liquid electrolyte solvent, the electrolyte needs to be fully dried, and then an appropriate amount of the liquid electrolyte solvent is added.

In a specific implementation of this application, a preparation process of the solid-state electrolyte includes: dispersing an organic ligand and a metal salt at a molar ratio of 1 :(1-4) in a solvent, performing ultrasonic dispersion and performing stirring for 10 minutes to 60 minutes, placing a mixed liquor into a reaction kettle at 80°C to 350°C for a solvothermal reaction, washing a product obtained through the reaction, and heating the product for 1 hour to 12 hours at 80°C to 350°C in vacuum for activation to obtain the powder sample. Then, the powder sample activated through heating is dispersed in the solution of the compound having the anionic group, and stirring is performed for 6 hours to 48 hours. The compound having the anionic group is coordinated with and grafted on the unsaturated metal site. After the reaction is completed, a sample obtained after the grafting is collected. Afterwards, the sample obtained after the grafting is dried and placed in the liquid electrolyte of the salt containing the cation. Stirring is performed for 6 hours to 48 hours for ion exchange. Drying is performed at 60°C to 100°C to obtain the powder sample of the coordination polymer electrolyte. Then, the powder sample of the coordination polymer electrolyte is dispersed in an organic solvent containing a binding agent. Blade coating is performed to obtain an electrolyte membrane. Finally, the electrolyte membrane is rolled to a target thickness.

The preparation method of the solid-state electrolyte in this embodiment of this application is simple. In addition, it is easy to obtain raw materials, thereby facilitating large-scale preparation.

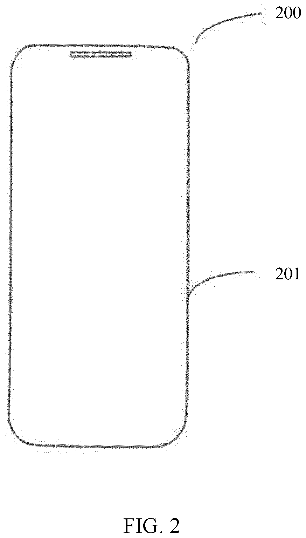

As shown in FIG. 2, an embodiment of this application further provides an electronic device 200. The electronic device 200 may be a mobile phone; or may be an electronic product such as a tablet computer, an intelligent wearable product, an uncrewed aerial vehicle, or an electric vehicle. The electronic device 200 includes a housing 201, and an electronic component and a battery (not shown in the figure) located inside the housing 201. The battery is the secondary battery provided in the foregoing embodiment of this application. The housing 201 may include a display assembled on a front side of the electronic device and a rear cover assembled on a rear side. The battery may be fastened on an inner side of the rear cover, and supplies power to the electronic component in the electronic device 200.

The following further describes embodiments of this application in a plurality of examples by using a lithium metal battery as an example.

### Example 1

A solid-state electrolyte including an organic-inorganic coordination polymer (as shown in Formula A) having an unsaturated aluminum site MIL-100(Al)-2-lithium sulfoethylamine and application thereof in a lithium metal battery are provided.

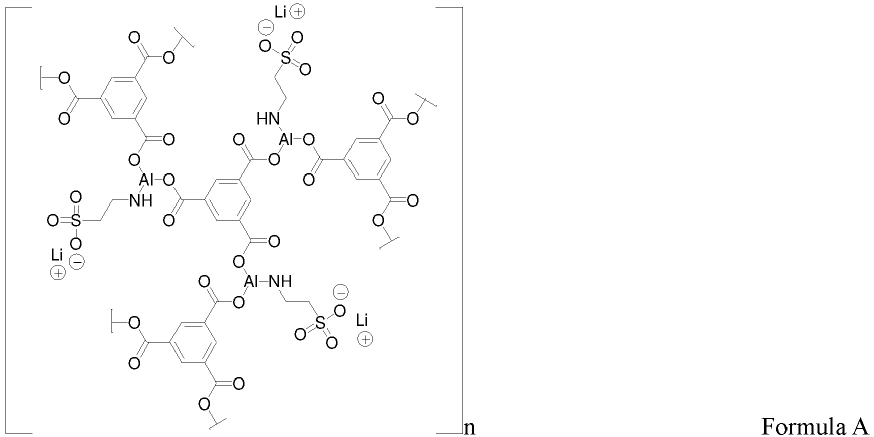

### Preparation of the solid-state electrolyte:

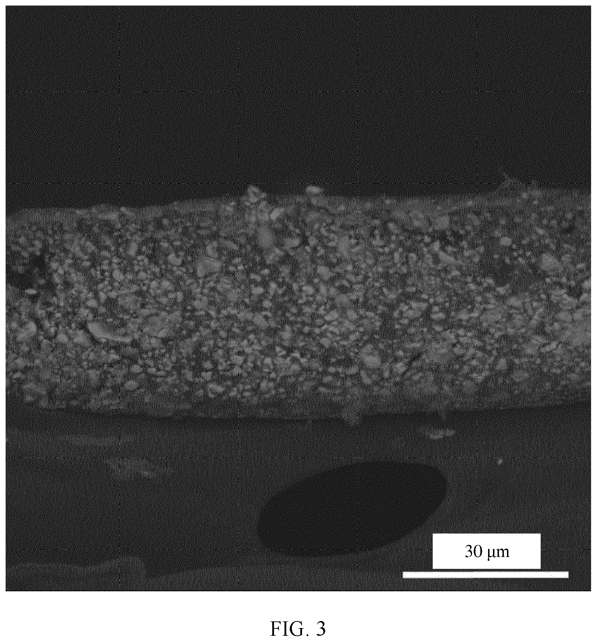

(1) 2.84 g aluminum nitrate nonahydrate and 1.04 g trimesic acid were dispersed in 40 mL 90% ethanol solution. Ultrasonic dispersion was performed, and stirring was performed on a mixed liquor for 30 minutes. The mixed liquor was transferred to a reaction kettle. The mixed liquor was heated to 120°C, and the temperature was kept for 1 hour. Then, the foregoing product was dried at 80°C, cleaned by using ethanol three times, and then heated at 150°C for 2 hours in vacuum to activate a sample.
(2) Then, the activated sample was added to a 0.5 mol/L 2-sulfoethylamine aqueous solution. Stirring was performed for 12 hours for a reaction. A product obtained after grafting was collected in a centrifugal manner, and then washed by using water and anhydrous ethanol. Obtained powder was dried (at 150°C) for 3 h in vacuum.
(3) The product obtained in step (2) was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte.
(4) The coordination polymer electrolyte was compounded by using a binding agent, such as polybenzimidazole (PBI). Specifically, 1 g PBI was dissolved in 10 mL N-methyl pyrrolidone (NMP). Stirring was performed at 50°C for 24 h. Then, 4 g of the coordination polymer electrolyte sample was added, and stirring was performed for 12 h, to obtain a mixed slurry. Then, the mixed slurry was applied on a quartz board, and was dried at 80°C in vacuum overnight. An obtained product was taken out, and was rolled to a specific thickness, to obtain a solid-state electrolyte with a thickness of 30 µm shown in FIG. 3.

Preparation of a LiCoO₂/Li lithium metal battery: Polyvinylidene fluoride (PVDF) with a mass percentage of 2%, a conductive agent super P with a mass percentage of 2%, and lithium cobalt oxide (LiCoO₂) with a mass percentage of 96% were weighed and successively added to N-methyl pyrrolidone (NMP). Stirring was fully performed for uniform mixing. A slurry was applied on an aluminum foil current collector, and was dried, cold-pressed, and cut to obtain a positive electrode plate.

The prepared positive electrode plate, a metal lithium negative electrode, and the solid-state electrolyte prepared in Example 1 was assembled into a buckle battery.

### Example 2

A solid-state electrolyte including an organic-inorganic coordination polymer (as shown in Formula B) having an unsaturated aluminum site MIL-100(Al)-3-lithium sulfopropylamine and application thereof in a lithium metal battery are provided.

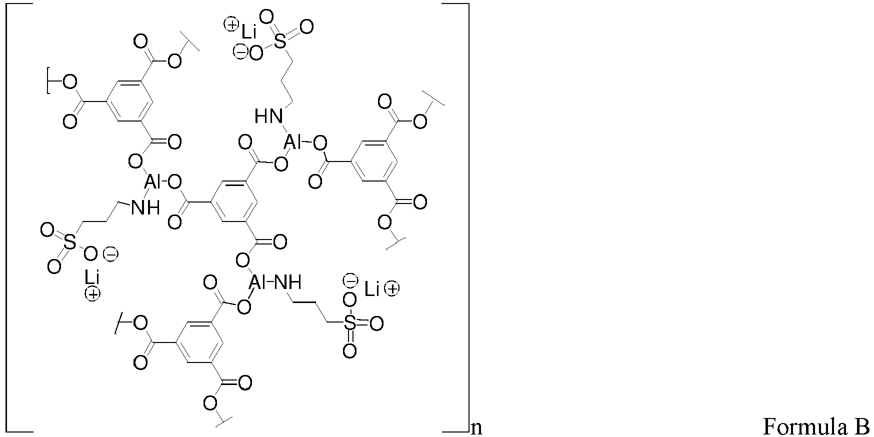

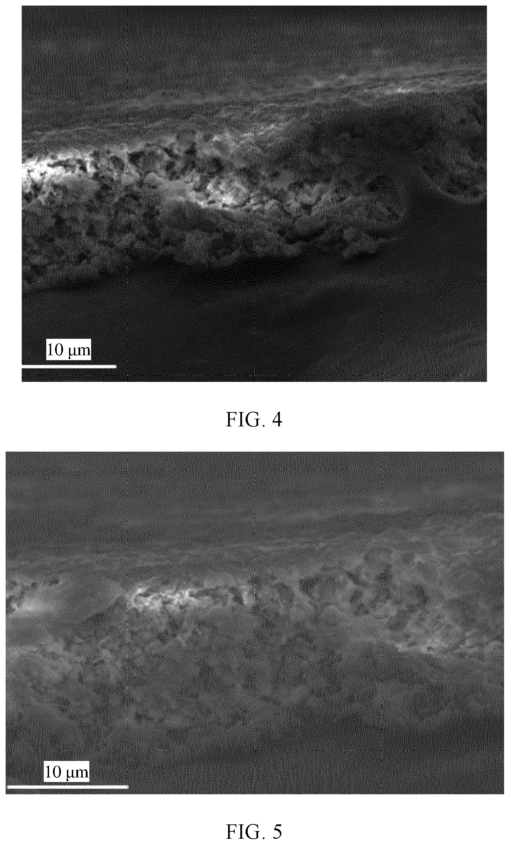

Preparation of the solid-state electrolyte: 2.3 g aluminum nitrate nonahydrate, 1.0 g benzenetricarboxylic acid, and 8 mL nitric acid were dispersed in 50 mL deionized water. Ultrasonic dispersion was performed, and stirring was performed on a mixed liquor for 20 minutes. The mixed liquor was transferred to a reaction kettle. The mixed liquor was heated to 210°C, and the temperature was kept for 3 hours. The mixed liquor was cooled to a room temperature. A product was collected in a centrifugal manner, then washed by using deionized water and ethanol each for three times, and then heated at 150°C for 3 hours in vacuum to activate a sample. Then, the activated sample was added to a 0.5 mol/L 3-sulfopropylamine aqueous solution. Stirring was performed for 12 h. A product was collected in a centrifugal manner, and then washed by using water and anhydrous ethanol. Obtained powder was dried (at 150°C) for 3 h in vacuum. The dried powder was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte. The sample was compounded by using a binding agent of polybenzimidazole (PBI). 0.5 g PBI was dissolved in 5 mL N-methyl pyrrolidone (NMP). Stirring was performed at 50°C for 24 h. 2 g of the sample was added to the solution. Stirring was performed for 12 h. Then, a mixed liquor was applied on a quartz board, and was dried at 80°C in vacuum overnight. An obtained product was taken out, and was rolled to a specific thickness, to obtain a solid-state electrolyte with a thickness of 10 µm shown in FIG. 4.

Preparation of a LiCoO₂/Li battery: The positive electrode plate prepared in Example 1, a metal lithium negative electrode, and the solid-state electrolyte prepared in Example 2 was assembled into a buckle battery.

### Example 3

A solid-state electrolyte including an organic-inorganic coordination polymer (as shown in Formula C) having an unsaturated zirconium site MOF-808(Zr)-2-lithium sulfoethylamine and application thereof in a lithium metal battery are provided.

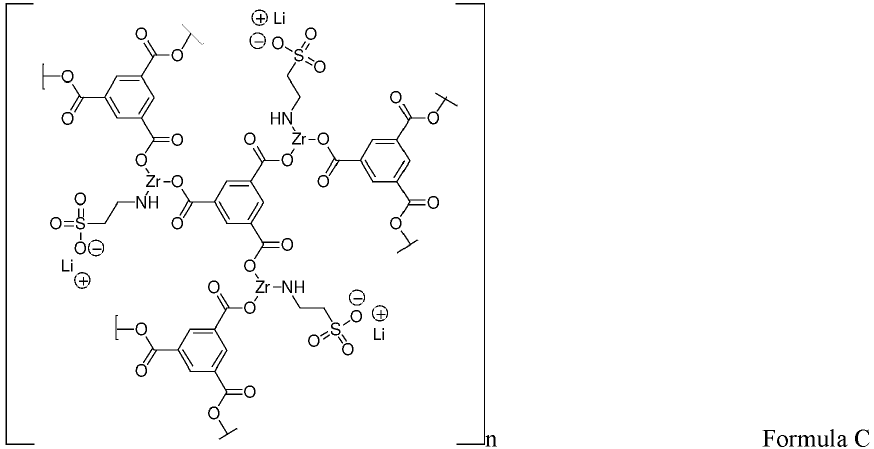

Preparation of the solid-state electrolyte: 9.7 g zirconyl chloride octahydrate and 2.1 g trimesic acid were dissolved in DMF/formic acid (300 mL/300 mL). Ultrasonic dispersion was performed, and stirring was performed on a mixed liquor for 30 minutes. The mixed liquor was transferred to a reaction kettle. The mixed liquor was heated to 130°C, and the temperature was kept for 48 hours. The mixed liquor was cooled to a room temperature. A product was collected in a centrifugal manner, then washed by using DMF for three times, and then heated at 150°C for 8 hours in vacuum to activate a sample. Then, the activated sample was added to a 0.5 mol/L 2-sulfoethylamine aqueous solution. Stirring was performed for 12 h. A product was collected in a centrifugal manner, and then washed by using water and anhydrous ethanol. Obtained powder was dried (at 150°C) for 3 h in vacuum. The dried powder was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte. The sample was compounded by using a binding agent, such as polybenzimidazole (PBI). 0.5 g PBI was dissolved in 5 mL N-methyl pyrrolidone (NMP). Stirring was performed at 50°C for 24 h. 2 g of the sample was added to the solution. Stirring was performed for 12 h. Then, a mixed liquor was applied on a quartz board, and was dried at 80°C in vacuum overnight. An obtained product was taken out, and was rolled to a specific thickness, to obtain a solid-state electrolyte with a thickness of 15 µm shown in FIG. 5.

Preparation of a LiCoO₂/Li battery: The positive electrode plate prepared in Example 1, a metal lithium negative electrode, and the solid-state electrolyte prepared in Example 3 was assembled into a buckle battery.

### Example 4

A solid-state electrolyte including an organic-inorganic coordination polymer (as shown in Formula D) having an unsaturated zirconium site MOF-808(Zr)-3-lithium sulfopropylamine and application thereof in a lithium metal battery are provided.

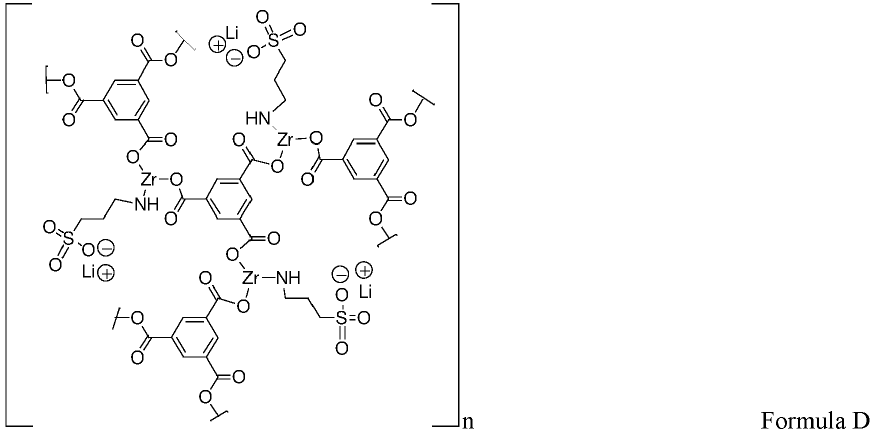

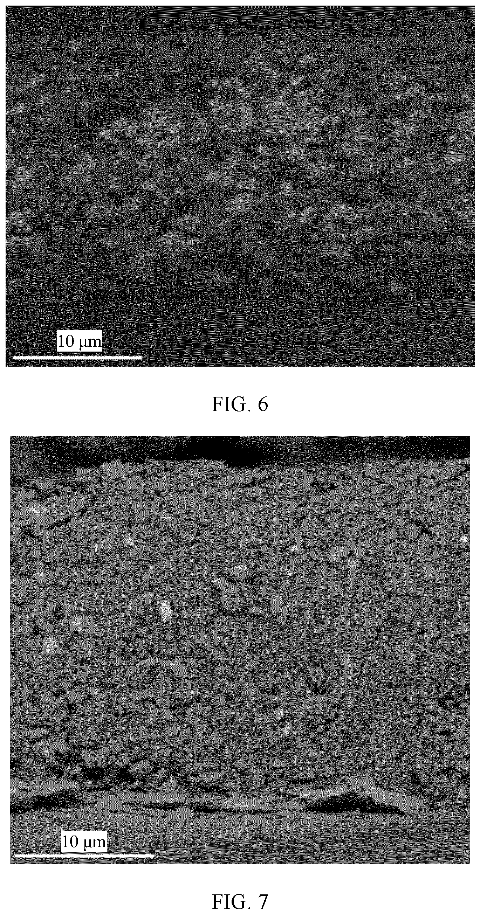

Preparation of the solid-state electrolyte: 9.7 g zirconyl chloride octahydrate and 2.1 g trimesic acid were dissolved in DMF/formic acid (300 mL/300 mL). Ultrasonic dispersion was performed, and stirring was performed on a mixed liquor for 30 minutes. The mixed liquor was transferred to a reaction kettle. The mixed liquor was heated to 130°C, and the temperature was kept for 48 hours. The mixed liquor was cooled to a room temperature. A product was collected in a centrifugal manner, then washed by using DMF for three times, and then heated at 150°C for 8 hours in vacuum to activate a sample. Then, the activated sample was added to a 0.5 mol/L 3-sulfopropylamine aqueous solution. Stirring was performed for 12 h. A product was collected in a centrifugal manner, and then washed by using water and anhydrous ethanol. Obtained powder was dried (at 150°C) for 3 h in vacuum. The dried powder was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte. The sample was compounded by using a binding agent, such as polybenzimidazole (PBI). 0.5 g PBI was dissolved in 5 mLN-methyl pyrrolidone (NMP). Stirring was performed at 50°C for 24 h. 2 g of the sample was added to the solution. Stirring was performed for 12 h. Then, a mixed liquor was applied on a quartz board, and was dried at 80°C in vacuum overnight. An obtained product was taken out, and was rolled to a specific thickness, to obtain a solid-state electrolyte with a thickness of 20 µm shown in FIG. 6.

Preparation of a LiCoO₂/Li battery: The positive electrode plate prepared in Example 1, a metal lithium negative electrode, and the solid-state electrolyte prepared in Example 4 was assembled into a buckle battery.

### Example 5

A solid-state electrolyte including an organic-inorganic coordination polymer (as shown in Formula E) having an unsaturated zirconium site MOF-808(Zr)-3-lithium mercaptosulfopropyl and application thereof in a lithium metal battery are provided.

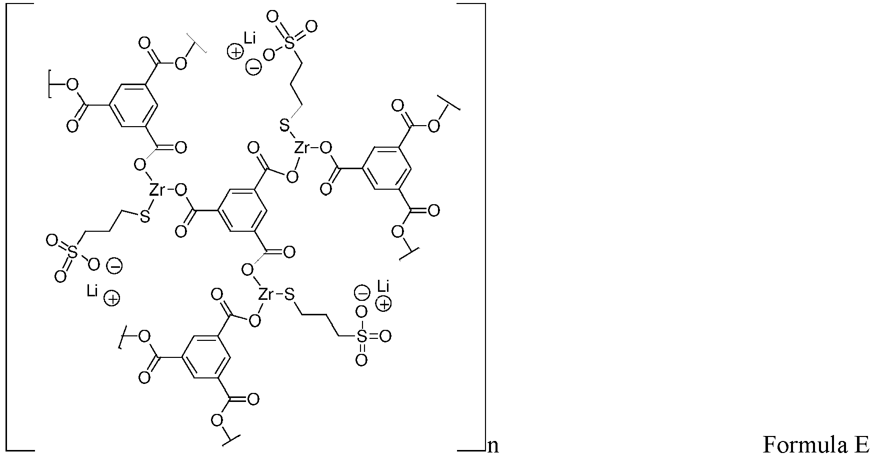

Preparation of the solid-state electrolyte: 9.7 g zirconyl chloride octahydrate and 2.1 g trimesic acid were dissolved in DMF/formic acid (300 mL/300 mL). Ultrasonic dispersion was performed, and stirring was performed on a mixed liquor for 30 minutes. The mixed liquor was transferred to a reaction kettle. The mixed liquor was heated to 130°C, and the temperature was kept for 48 hours. The mixed liquor was cooled to a room temperature. A product was collected in a centrifugal manner, then washed by using DMF for three times, and then heated at 150°C for 8 hours in vacuum to activate a sample. Then, the activated sample was added to a 0.5 mol/L 3-mercaptosulfopropyl aqueous solution. Stirring was performed for 12 h. A product was collected in a centrifugal manner, and then washed by using water and anhydrous ethanol. Obtained powder was dried (at 150°C) for 3 h in vacuum. The dried powder was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte. The sample was compounded by using a binding agent, such as polybenzimidazole (PBI). 1 g PBI was dissolved in 10 mLN-methyl pyrrolidone (NMP). Stirring was performed at 50°C for 24 h. 4 g of the sample was added to the solution. Stirring was performed for 12 h. Then, a mixed liquor was applied on a quartz board, and was dried at 80°C in vacuum overnight. An obtained product was taken out, and was rolled to a specific thickness, to obtain a solid-state electrolyte with a thickness of 25 µm shown in FIG. 7.

Preparation of a LiCoO₂/Li battery: The positive electrode plate prepared in Example 1, a metal lithium negative electrode, and the solid-state electrolyte prepared in Example 5 was assembled into a buckle battery.

### Example 6

A solid-state electrolyte including an organic-inorganic coordination polymer (as shown in Formula F) having an unsaturated zirconium site MOF-808(Zr)-2-lithium hydroxyethanesulphonate and application thereof in a lithium metal battery are provided.

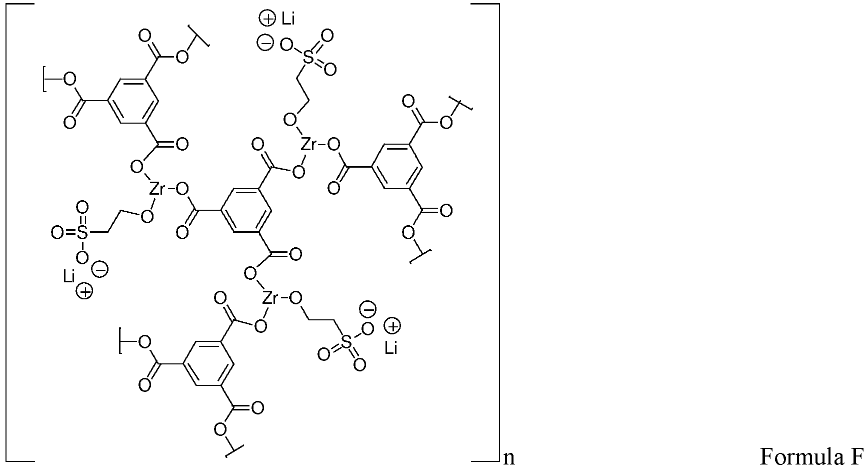

Preparation of the solid-state electrolyte: 9.7 g zirconyl chloride octahydrate and 2.1 g trimesic acid were dissolved in DMF/formic acid (300 mL/300 mL). Ultrasonic dispersion was performed, and stirring was performed on a mixed liquor for 30 minutes. The mixed liquor was transferred to a reaction kettle. The mixed liquor was heated to 130°C, and the temperature was kept for 48 hours. The mixed liquor was cooled to a room temperature. A product was collected in a centrifugal manner, then washed by using DMF for three times, and then heated at 150°C for 8 hours in vacuum to activate a sample. Then, the activated sample was added to a 0.5 mol/L 2-hydroxyethanesulphonate aqueous solution. Stirring was performed for 12 h. A product was collected in a centrifugal manner, and then washed by using water and anhydrous ethanol. Obtained powder was dried (at 150°C) for 3 h in vacuum. The dried powder was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte. The sample was compounded by using a binding agent, such as polybenzimidazole (PBI). 1 g PBI was dissolved in 10 mLN-methyl pyrrolidone (NMP). Stirring was performed at 50°C for 24 h. 4 g of the sample was added to the solution. Stirring was performed for 12 h. Then, a mixed liquor was applied on a quartz board, and was dried at 80°C in vacuum overnight. An obtained product was taken out, and was rolled to obtain a solid-state electrolyte with a thickness of 25 µm.

Preparation of a LiCoO₂/Li battery: The positive electrode plate prepared in Example 1, a metal lithium negative electrode, and the solid-state electrolyte prepared in Example 6 was assembled into a buckle battery.

Example 7: A solid-state electrolyte including an organic-inorganic coordination polymer (as shown in Formula G) having an unsaturated zirconium site MOF-808(Zr)-3-lithium mercaptopropionate and application thereof in a lithium metal battery are provided.

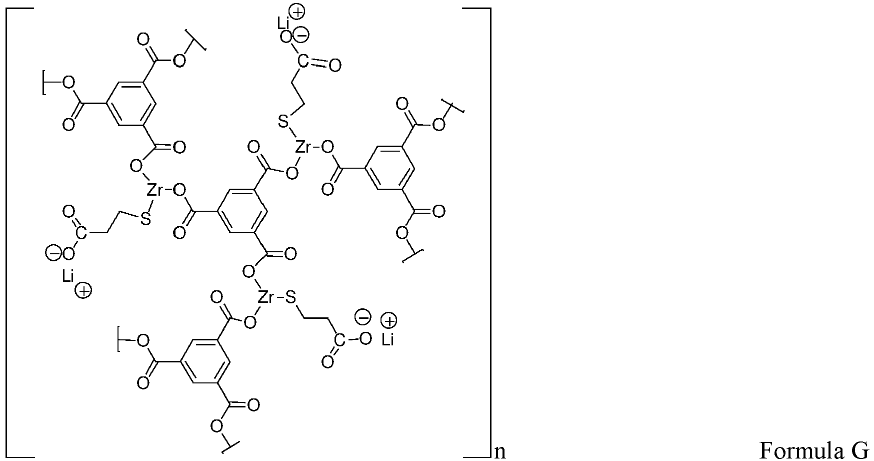

Preparation of the solid-state electrolyte: 9.7 g zirconyl chloride octahydrate and 2.1 g trimesic acid were dissolved in DMF/formic acid (300 mL/300 mL). Ultrasonic dispersion was performed, and stirring was performed on a mixed liquor for 30 minutes. The mixed liquor was transferred to a reaction kettle. The mixed liquor was heated to 130°C, and the temperature was kept for 48 hours. The mixed liquor was cooled to a room temperature. A product was collected in a centrifugal manner, then washed by using DMF for three times, and then heated at 150°C for 8 hours in vacuum to activate a sample. Then, the activated sample was added to a 0.5 mol/L 3-mercaptopropionate aqueous solution. Stirring was performed for 12 h. A product was collected in a centrifugal manner, and then washed by using water and anhydrous ethanol. Obtained powder was dried (at 150°C) for 3 h in vacuum. The dried powder was immersed in a 1 mol/L lithium bistrifluoromethanesulfonimide (LiTFSI) acetonitrile solution for one day. After ion exchange was fully implemented, drying was performed at 80°C for 12 h in vacuum, to obtain a coordination polymer electrolyte. The sample was compounded by using a binding agent, such as polybenzimidazole (PBI). 1 g PBI was dissolved in 10 mLN-methyl pyrrolidone (NMP). Stirring was performed at 50°C for 24 h. 4 g of the sample was added to the solution. Stirring was performed for 12 h. Then, a mixed liquor was applied on a quartz board, and was dried at 80°C in vacuum overnight. An obtained product was taken out, and was rolled to obtain a solid-state electrolyte with a thickness of 20 µm.

Preparation of a LiCoO₂/Li battery: The positive electrode plate prepared in Example 1, a metal lithium negative electrode, and the solid-state electrolyte prepared in Example 7 was assembled into a buckle battery.

### Comparative example 1

Preparation of a LiCoO₂/Li battery: The metal lithium negative electrode, the positive electrode plate prepared in Example 1, and a PE separator were assembled into a buckle battery. A 50 µL 1.0 mol/L LiPF₆ liquid electrolyte (a weight ratio of EC, DEC, and FEC is 47:47:6) was added.

### Comparative example 2

Preparation of a LiCoO₂/Li battery: The metal lithium negative electrode, the positive electrode plate prepared in Example 1, and a 50 µm oxide ceramic electrolyte (Li₇La₃Zr₂O₁₂, LLZO) were assembled into a buckle battery.

To effectively support beneficial effect brought by the technical solutions in Examples 1 to 7 of this application, the following tests are provided.

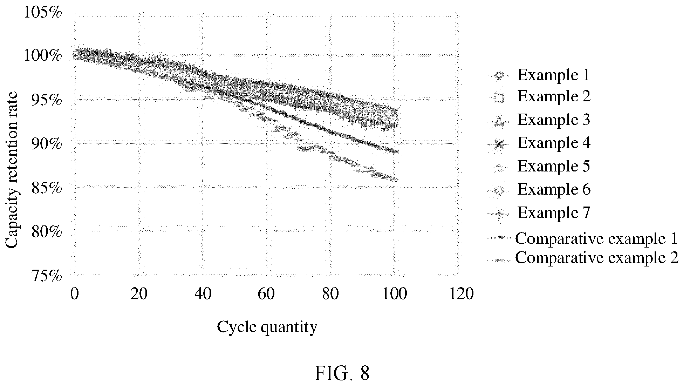

Cycle performance test for the LiCoO₂/Li battery: A charge and discharge test was performed on the batteries prepared in Examples 1 to 7 and Comparative examples 1 and 2 according to a charge and discharge rule of 0.2 C/0.5 C. A voltage range was 3.0 V to 4.5 V Test results are shown in Table 1 and FIG. 8.

Rate performance test for the LiCoO₂/Li battery: A charge and discharge test was performed on the batteries prepared in Examples 1 to 7 and Comparative examples 1 and 2 at charge and discharge rates of 0.2/0.2 C, 0.2/0.5 C, 0.2/1.0 C, 0.2/1.5 C, and 0.2/2.0 C. A voltage range was 3.0 V to 4.5 V. Capacity retention rates for 2.0 C relative to 0.2 C were recorded. Test results are shown in Table 1.

**Table 1: Different battery performance test results**

| Sequence number | Quantity of transported lithium ions in an electrolyte | Capacity retention rate at 2.0 C | Capacity retention rate after 50 cycles | Capacity retention rate after 100 cycles |
|---|---|---|---|---|
| Example 1 | 0.92 | 85.1% | 96.1% | 92.5% |
| Example 2 | 0.93 | 85.3% | 96.5% | 92.8% |
| Example 3 | 0.92 | 84.9% | 97.1% | 93.5% |
| Example 4 | 0.94 | 85.1% | 96.9% | 93.4% |
| Example 5 | 0.93 | 85.0% | 96.8% | 93.2% |
| Example 6 | 0.92 | 84.8% | 96.7% | 92.3% |
| Example 7 | 0.90 | 83.3% | 96.6% | 91.9% |
| Comparative example 1 | 0.33 | 85.2% | 95.3% | 89.0% |
| Comparative example 2 | 1.00 | 72.3% | 94.7% | 85.9% |

It can be learned from the results in Table 1 that the capacity retention rates of the lithium cobalt oxide/lithium batteries in Examples 1 to 7 of this application after 50 cycles are all higher than the capacity retention rates of the lithium cobalt oxide/lithium batteries in Comparative examples 1 and 2 after 50 cycles. It can be learned from the test results in Table 1 and FIG. 8 that the capacity retention rates of the lithium cobalt oxide/lithium batteries in Examples 1 to 7 of this application after 100 cycles are all higher than the capacity retention rates of the lithium cobalt oxide/lithium batteries in Comparative examples 1 and 2 after 100 cycles. It indicates that the cycle performance of the battery can be significantly improved by using the metal-organic coordination polymer single-ion solid-state electrolyte in embodiments of this application. In addition, it can be further learned from Table 1 that quantities of transported lithium ions in the solid-state electrolytes in Examples 1 to 7 of this application are all greater than or equal to 0.9, and are far greater than a quantity of transported lithium ions in the liquid-state electrolyte in Comparative example 1. It is because the solid-state electrolytes used in the batteries in Examples 1 to 7 of this application can implement transmission of a single cation, and have a high cation transport quantity. Due to the transmission of the single ion, generation of concentration polarization in a battery system can be effectively avoided, a deposition/dissolution action of lithium ions at a lithium negative electrode can be adjusted, growth of a lithium negative electrode dendrite can be suppressed, and the cycle performance of the battery can be improved.

Compared with Comparative example 2, the lithium cobalt oxide/lithium batteries in Examples 1 to 7 of this application present better cycle performance. It is mainly because the solid-state electrolytes in Examples 1 to 7 of this application have good interface contact with the electrodes, so that interface impedance can be reduced and cycle stability performance of the battery can be improved. In addition, rate performance of the lithium cobalt oxide/lithium batteries in Examples 1 to 7 of this application is similar to that of the battery with the liquid-state electrolyte in Comparative example 1, and is better than that of the battery with the oxide ceramic solid-state electrolyte in Comparative example 2.

## Claims

1. A solid-state electrolyte, wherein the solid-state electrolyte comprises a porous coordination polymer having an unsaturated metal site, an anionic group coordinated with and grafted on the unsaturated metal site, and a cation bound with the anionic group; the anionic group comprises one or more substituted carboxylate anionic groups and/or one or more substituted sulfonate anionic groups; and the cation comprises one or more of a lithium ion, a sodium ion, a potassium ion, a magnesium ion, a zinc ion, and an aluminum ion.

2. The solid-state electrolyte according to claim 1, wherein a structural formula of the anionic group is -Y-R₂-Z, wherein Y represents an oxygen atom, a sulfur atom, or an imine group, R₂ is a divalent hydrocarbyl group, a divalent substituted hydrocarbyl group, a divalent oxyl group, or a divalent substituted oxyl group, Z is a carboxylate anion or a sulfonate anion, and the anionic group is coordinated with the unsaturated metal site through Y

3. The solid-state electrolyte according to claim 1, wherein R₂ is a hydrocarbyl group, a substituted hydrocarbyl group, an oxyl group, or a substituted oxyl group in which a quantity of carbon atoms ranges from 1 to 20.

4. The solid-state electrolyte according to claim 2 or 3, wherein R₂ is any one of an alkylene group, a halogenated alkylene group, an alkoxylene group, a halogenated alkoxylene group, an alkenylene group, a halogenated alkenylene group, an enoxylene group, a halogenated enoxylene group, an arylene group, a halogenated arylene group, an aryloxylene group, and a halogenated aryloxylene group.

5. The solid-state electrolyte according to any one of claims 1 to 4, wherein the porous coordination polymer comprises a metal center and an organic ligand, the metal center comprises one or more metal elements of titanium, zirconium, hafnium, chromium, iron, cobalt, nickel, copper, and aluminum, the metal element comprises one or more valence states, and the organic ligand is R-Xₙ, wherein R is an n-valent hydrocarbyl group, an n-valent substituted hydrocarbyl group, an n-valent oxyl group, or an n-valent substituted oxyl group, n is an integer from 1 to 4, and X is an oxygen-containing functional group that forms a metal-oxygen chemical bond with the unsaturated metal site.

6. The solid-state electrolyte according to claim 5, wherein X is a carboxyl group or a sulfo group.

7. The solid-state electrolyte according to claim 5 or 6, wherein R is a hydrocarbyl group, a substituted hydrocarbyl group, an oxyl group, or a substituted oxyl group in which a quantity of carbon atoms ranges from 1 to 20.

8. The solid-state electrolyte according to any one of claims 5 to 7, wherein R is any one of an alkyl group, an alkylene group, a halogenated alkyl group, a halogenated alkylene group, an alkoxyl group, an alkoxylene group, a halogenated alkoxyl group, a halogenated alkoxylene group, an alkenyl group, an alkenylene group, a halogenated alkenyl group, a halogenated alkenylene group, an enoxyl group, an enoxylene group, a halogenated enoxyl group, a halogenated enoxylene group, an aryl group, an arylene group, a halogenated aryl group, a halogenated arylene group, an aryloxyl group, an aryloxylene group, a halogenated aryloxyl group, and a halogenated aryloxylene group.

9. The solid-state electrolyte according to any one of claims 5 to 8, wherein the organic ligand comprises one or more of terephthalic acid, trimesic acid, biphenyldicarboxylic acid, biphenyltricarboxylic acid, and 1,3,5-tri(4-carboxyphenyl)benzene.

10. The solid-state electrolyte according to any one of claims 1 to 9, wherein a thickness of the solid-state electrolyte ranges from 1 µm to 100 µm.

11. The solid-state electrolyte according to any one of claims 1 to 10, wherein the solid-state electrolyte further comprises a liquid electrolyte solvent, and a mass percentage of the liquid electrolyte solvent in the solid-state electrolyte is less than or equal to 20%.

12. The solid-state electrolyte according to any one of claims 1 to 11, wherein the solid-state electrolyte further comprises a binding agent.

13. The solid-state electrolyte according to claim 12, wherein the binding agent comprises one or more of polyvinylidene fluoride, poly(methyl methacrylate), polytetrafluoroethylene, poly(vinylidene fluoride-co-hexafluoropropylene), polyacrylonitrile, polyimide, polybenzimidazole, polyethylene glycol, polyethylene oxide, polydopamine, sodium carboxymethyl cellulose, styrene-butadiene rubber, polyvinyl alcohol, polyacrylic acid, lithium polyacrylate, polyvinylpyrrolidon, polylactic acid, sodium alginate, polystyrene sulfonate, lithium polystyrene sulfonate, and gelatin.

14. A preparation method of a solid-state electrolyte, comprising:
making a mixed slurry by using a coordination polymer electrolyte, performing coating by using the mixed slurry to form a membrane, and performing drying to obtain a solid-state electrolyte, wherein the coordination polymer electrolyte comprises a porous coordination polymer having an unsaturated metal site, an anionic group coordinated with and grafted on the unsaturated metal site, and a cation bound with the anionic group; the anionic group comprises one or more substituted carboxylate anionic groups and/or one or more substituted sulfonate anionic groups; and the cation comprises one or more of a lithium ion, a sodium ion, a potassium ion, a magnesium ion, a zinc ion, and an aluminum ion.

15. The preparation method according to claim 14, wherein preparation of the coordination polymer electrolyte comprises:
dispersing the porous coordination polymer having the unsaturated metal site in a solution of a compound having the anionic group, and performing stirring for a reaction, so that the compound having the anionic group is coordinated with and grafted on the unsaturated metal site, to obtain a grafted product, wherein the compound having the anionic group comprises one or more of substituted carboxylic acid and substituted sulfoacid; and
placing the grafted product in a liquid electrolyte of a salt containing the cation, and performing stirring for a reaction, to obtain the coordination polymer electrolyte.

16. The preparation method according to claim 15, wherein before the dispersing the porous coordination polymer having the unsaturated metal site in a solution of a compound having the anionic group, the preparation method further comprises:
heating the porous coordination polymer having the unsaturated metal site for 1 hour to 12 hours at 80°C to 350°C in vacuum for activation.

17. The preparation method according to claim 15, wherein the salt containing the cation comprises one or more of hexafluorophosphate, hexafluoroarsenate, perchlorate, tetrafluoroborate, bisoxalatoborate, difluoro(oxalato)borate, bisfluorosulfonimide, and bis(fluorosulfonyl)imide that contain the cation.

18. The preparation method according to claim 14, wherein the mixed slurry comprises an organic solvent and/or a binding agent.

19. A secondary battery, comprising a positive electrode plate, a metal negative electrode plate, and an electrolyte, wherein the electrolyte comprises the solid-state electrolyte according to any one of claims 1 to 13.

20. An electronic device, comprising a housing, and an electronic component and a battery that are accommodated in the housing, wherein the battery supplies power to the electronic component, and the battery comprises the secondary battery according to claim 19.
